## Europäisches Patentamt
## European Patent Office
## Office européen des brevets

(19)

(11) Numéro de publication : **0 037 032**
**B1**

(12)

# FASCICULE DE BREVET EUROPÉEN

(45) Date de publication du fascicule du brevet :
25.07.84

(51) Int. Cl.³ : **B 29 F 1/10**

(21) Numéro de dépôt : 81102094.0

(22) Date de dépôt : 20.03.81

(54) **Dispositif d'alimentation automatique en busulures d'une presse de moulage.**

(30) Priorité : 27.03.80 FR 8006835

(43) Date de publication de la demande :
07.10.81 Bulletin 81/40

(45) Mention de la délivrance du brevet :
25.07.84 Bulletin 84/30

(84) Etats contractants désignés :
AT BE CH DE FR GB IT LI LU NL SE

(56) Documents cités :
FR-A- 1 395 824
FR-A- 2 314 035
GB-A-   980 617
US-A- 2 579 951

(73) Titulaire : **COMPAGNIE EUROPEENNE D'ACCUMU-
LATEURS Société anonyme dite:**
**16, rue de la Baume**
**F-75008 Paris (FR)**

(72) Inventeur : **Boniface, Jean-Paul**
**Rue de la Carrière**
**Flamicourt F-80200 Péronne (FR)**
Inventeur : **Ponceblanc, Gilbert**
**16, Hameau Jean Racine**
**F-80000 Amiens (FR)**

(74) Mandataire : **Weinmiller, Jürgen et al**
**Zeppelinstrasse 63**
**D-8000 München 80 (DE)**

Jouve, 18, rue St-Denis, 75001 Paris, France

### Description

La présente invention concerne un dispositif d'alimentation automatique en busulures d'une presse pour mouler des pièces comportant chacune au moins une busulure, cette presse ayant deux parties déplaçables par rapport à une partie fixe et au moins une branche descendante d'alimentation en busulures, cette branche débouchant dans un alésage aménagé dans l'une des parties déplaçables.

On sait que les couvercles de batteries d'accumulateurs comportent au moins une pièce de plomb dite busulure destinée à la sortie des bornes et qui est insérée dans le couvercle confectionné en une matière plastique telle que le polypropylène, le polystyrène ou autres.

Il est donc nécessaire, lors de la fabrication desdits couvercles d'introduire au moins une telle pièce dans un moule de pressage dans lequel on coule et presse la matière plastique.

A l'heure actuelle l'introduction des busulures et leur positionnement dans le moule sont effectués pendant l'ouverture de la presse soit manuellement, soit mécaniquement au moyen d'un chargeur mobile dans ce dernier cas.

Cependant de tels processus opératoires présentent un certain nombre d'inconvénients.

Le processus manuel nécessite bien entendu d'employer un opérateur à temps complet et de plus il entraîne des pertes de temps résultant de l'arrêt de la presse en position ouverte, du temps de positionnement des busulures dans le moule, ainsi que de l'ouverture et de la fermeture d'un rideau de sécurité.

En outre la cadence de production selon un tel mode opératoire est bien entendu fonction de l'habilité de l'opérateur et il présente cependant des risques pour ce dernier lorsqu'il introduit sa main dans le moule, malgré les systèmes de sécurité mis en œuvre.

Un dispositif utilisant un processus automatique d'alimentation selon le préambule de la revendication 1 est connu, par exemple à partir du document FR-A 2 314 035. Selon ce document, on veut fabriquer simultanément deux couvercles et l'on fait descendre successivement deux ébauchés vers leurs moules respectifs. Les ébauchés sont alors aspirés par une dépression d'air dans le moule avant la fermeture de la presse.

L'invention a pour but d'adapter un tel dispositif à la fabrication de couvercles d'accumulateur ayant chacun au moins une busulure de faibles dimensions en plomb intégrée dans le couvercle. Dans ce cas, en effet, l'alimentation successive du moule en plusieurs busulures entraîne une perte de temps importante et complique leur aiguillage à partir d'un réservoir unique vers les différents positionnements dans le moule. En outre, il est difficile de maintenir en place par dépression d'air les busulures de faibles dimensions.

L'invention a pour objet un dispositif tel que défini ci-dessus, qui est caractérisé par le fait que, les pièces étant des couvercles d'accumulateurs, un poussoir étant associé à chaque alésage est lié à la partie fixe de la presse et peut être introduit dans cet alésage au cours de la translation de ladite partie déplaçable, qu'une broche associée à chaque alésage est prévue sur l'autre partie déplaçable et disposée en regard de cet alésage, de sorte que d'une part lors de la fermeture de la presse par translation des deux parties mobiles venant en butée contre la partie fixe de la presse, et avant moulage, une busulure soit acheminée dans l'alésage par le poussoir jusqu'à engagement dans la broche, et que d'autre part lors de l'ouverture de la presse et après moulage, une nouvelle busulure est introduite par gravité dans l'alésage à l'extrémité dudit poussoir.

L'invention sera décrite ci-après plus en détail à l'aide d'un exemple de réalisation en référence aux dessins annexés dans lesquels :

La figure 1 représente schématiquement un mode de réalisation du dispositif selon l'invention.

La figure 2 représente une coupe selon l'axe II-II de la figure 1.

La figure 3 et la figure 4 représentent la mise en œuvre du dispositif selon l'invention dans une presse de moulage de couvercle pour batteries d'accumulateurs.

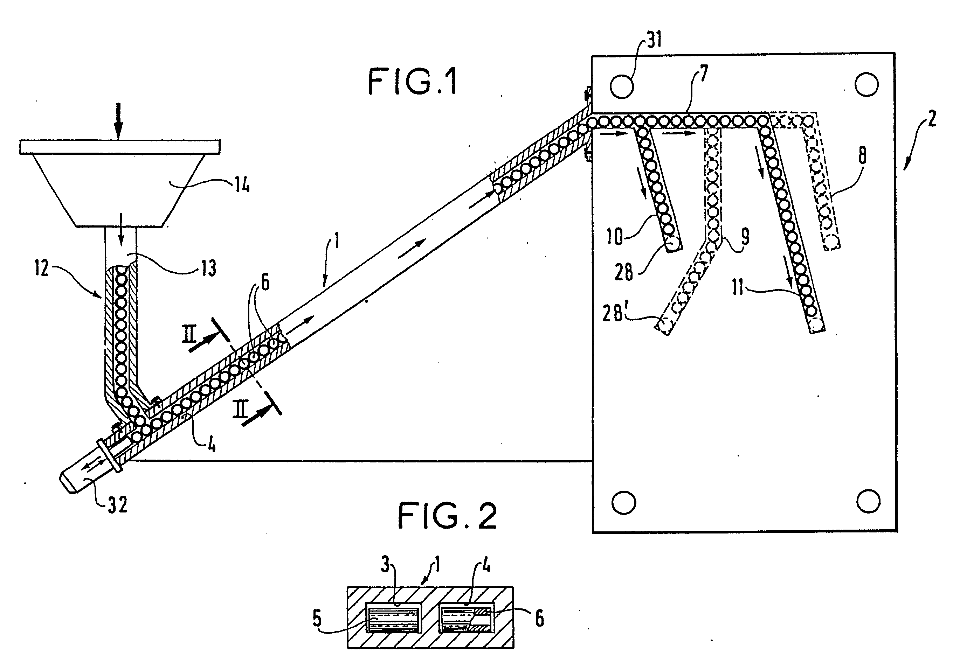

Sur les figures 1 et 2, on voit une goulotte 1 qui achemine des busulures de plomb vers une presse 2. Cette goulotte présente deux compartiments 3 et 4 affectés respectivement aux busulures négatives 5 et positives 6, pouvant d'ailleurs présenter des dimensions différentes entr'elles. Au niveau de la presse 2 cette goulotte présente une partie 7 sensiblement horizontale se subdivisant en deux branches descendantes d'alimentation pour chacun des compartiments 3 et 4. Ainsi, le compartiment 3 se subdivise en deux branches 8 et 9 tandis que le compartiment 4 se ramifie pour sa part en deux branches 10 et 11.

Un organe 12 approvisionne les compartiments 3 et 4 de la goulotte 1 en busulures. Cet organe comporte un conduit 13 à deux compartiments alimentant les compartiments 3 et 4 par gravité en busulures stockées dans un réservoir 14. On pourrait bien entendu envisager d'autres moyens d'approvisionnement tels que par exemple un bol vibrant, un vérin, un tapis transporteur ou autres.

Enfin, un vérin 32 pousse les busulures dans leurs compartiments respectifs.

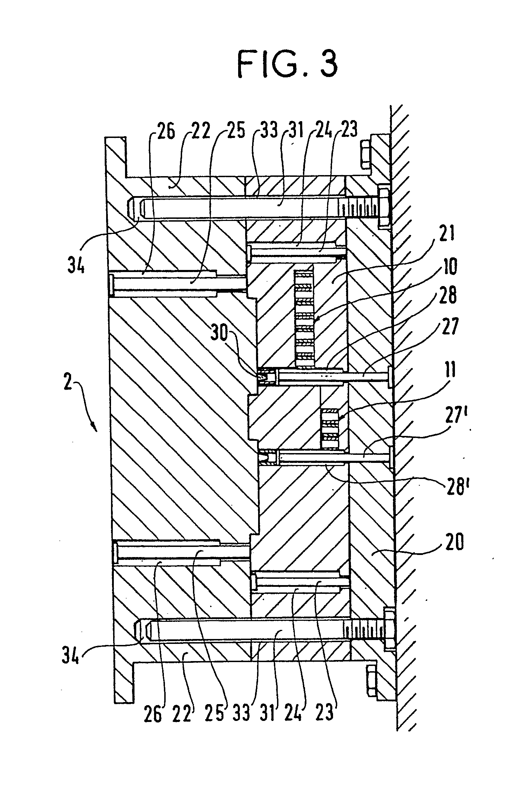

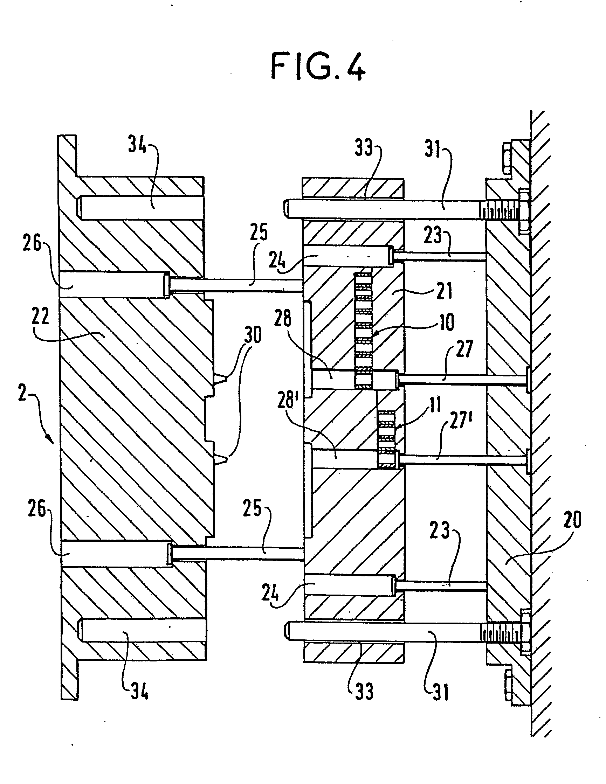

En se référant maintenant aux figures 3 et 4, on voit que la presse de moulage comprend une partie fixe 20 et deux parties mobiles 21 et 22.

La partie fixe 20 est solidaire d'attelles de limitation de course 23 aptes à venir s'engager dans des alésages 24 aménagés dans la partie mobile 21. Ladite partie mobile 21 comporte elle-même des attelles 25 pouvant coulisser dans des alésages 26 prévus dans la partie mobile 22. Par ailleurs des poussoirs tels que 27 et 27' liés à la partie fixe 20 peuvent venir s'engager respectivement dans des alésages 28 et 28' prévus dans la partie mobile 21. L'alésage 28 communique avec la branche 10 de la goulotte 1, tandis que l'alésage 28' est en relation avec la branche 11 (figure 1). Bien entendu, des dispositions analogues, non représentées sur les figures 3 et 4, sont prévues pour les branches 8 et 9. Enfin, des broches telles que 30 sont prévues sur la partie mobile 22 en vis-à-vis des alésages 28, 28' et autres.

Le dispositif selon l'invention fonctionne conformément à ce qui suit :

On notera en premier lieu que les compartiments 3 et 4 de la goulotte 1 ainsi que le conduit 13 sont en permanence garnis de busulures en contact les unes avec les autres.

Si l'on suppose maintenant que la presse 2 est en position ouverte (figure 4) on voit que dans chaque alésage 28 et 28' se trouve une busulure et cela à l'extrémité des poussoirs 27 et 27' respectivement.

On procède alors à la fermeture de la presse.

A cet effet successivement la partie mobile 22 vient en butée sur la partie mobile 21 et l'ensemble contre la partie fixe 20, de tels mouvements étant guidés par tout moyen approprié, notamment par des colonnes telles que 31 liées à la partie fixe 20 et venant s'engager dans des alésages 33 et 34 prévus dans les parties mobiles 21 et 22.

Dans le même temps chaque busulure présente dans les alésages 28 et 28' y est entraînée par les poussoirs 27 et 27' jusqu'à venir s'engager dans les broches 30 de la partie mobile 22, comme représenté figure 3 où la presse se trouve en position fermée. On procède à l'injection de matière plastique et au moulage du couvercle, à la manière connue.

Puis on ouvre la presse dont les diverses parties prennent la position illustrée figure 4, afin d'enlever le couvercle moulé muni de ses busulures en l'occurrence deux positives et deux négatives. Dans cette position, on voit que les poussoirs 27 et 27' démasquent l'extrémité des branches 10 et 11 de sorte qu'une busulure tombe par gravité dans chaque alésage 28 et 28'.

Dans chacune des branches 10, 11, 8 et 9 les busulures viennent en contact par gravité avec la busulure se trouvant dans l'alésage. A ce moment, le vérin 32 pousse l'ensemble des busulures dans les compartiments 3 et 4 de façon à rétablir leur contact mutuel, tandis qu'une busulure descend par gravité à l'extrémité de chaque compartiment 3 et 4, cette busulure débouchant des compartiments du conduit 13 du dispositif d'approvisionnement 14 et ainsi de suite.

On voit que le dispositif selon l'invention opère de façon entièrement automatique, la seule surveillance à effectuer étant l'approvisionnement en busulures du réservoir 14.

En outre, l'invention permet dans le cas où il faut introduire des busulures chaudes dans un moule chaud de réchauffer ces dernières au cours de leur cheminement.

Bien entendu le dispositif selon l'invention pourrait éventuellement être mis en œuvre pour insérer un nombre quelconque de busulures dans des couvercles pour batteries d'accumulateurs.

De même il peut également être adapté à l'insertion de pièces de forme et de nature quelconques dans des structures en matière plastique moulées.

De telles variantes à la portée de l'homme de l'art ne sauraient donc être considérées comme étant en dehors des limites de l'invention.

**Revendications**

1. Dispositif d'alimentation automatique en busulures d'une presse pour mouler des pièces comportant chacune au moins une busulure, cette presse ayant deux parties déplaçables par rapport à une partie fixe et au moins une branche descendante d'alimentation en busulures, cette branche débouchant dans un alésage (28, 28') aménagé dans l'une des parties déplaçables, caractérisé par le fait que, les pièces étant des couvercles d'accumulateur, un poussoir (27, 27') étant associé à chaque alésage est lié à la partie fixe (20) de la presse (2) et peut être introduit dans cet alésage (28, 28') au cours de la translation de ladite partie déplaçable (21), qu'une broche (30) associée à chaque alésage est prévue sur l'autre partie déplaçable et disposée en regard de cet alésage, de sorte que d'une part lors de la fermeture de la presse par translation des deux parties mobiles (21, 22) venant en butée contre la partie fixe (20) de la presse, et avant moulage, une busulure (6) soit acheminée dans l'alésage (28, 28') par le poussoir jusqu'à engagement dans la broche (30), et que d'autre part lors de l'ouverture de la presse (2) et après moulage, une nouvelle busulure (6) est introduite par gravité dans l'alésage à l'extrémité dudit poussoir.

2. Dispositif selon la revendication 1, caractérisé par le fait que chaque branche descendante d'alimentation en busulure est en permanence garnie de busulures (5, 6) en contact les unes avec les autres.

3. Dispositif selon l'une des revendications 1 ou 2, caractérisé par le fait qu'il comporte un organe (12) apte à approvisionner chaque branche d'alimentation en busulures (5, 6).

4. Dispositif selon la revendication 3, caractérisé par le fait qu'il comprend un moyen (32) pouvant après chaque mise en place d'une busulure (5, 6) dans la presse (8), et donc après approvisionnement desdites branches d'alimentation par ledit organe (12) en une nouvelle busulure, entraîner l'ensemble des busulures dans la goulotte (1).

5. Dispositif selon la revendication 4, caractérisé par le fait que ledit moyen (32) comporte un vérin.

**Claims**

1. A device for automatically feeding bushes to a press for moulding pieces each of which comprises at least one bush, the press having two parts which are moving with respect to a stationary part, and at least one descending branch for feeding bushes, this branch communicating with a bore (28, 28') provided in one of the moving parts, characterized in that, the pieces being covers for accumulator batteries, a push rod (27, 27') associated to each bore is connected to the stationary part (20) of the press and can be inserted into that bore (28, 28') during the translatory movement of said moving part (21), that a stud (30) associated to each bore is provided on the other moving part and disposed in face to face relationship with said bore so that, on the one hand, when the press is closed by the translatory movement of the two moving parts (21, 22) which abut against the stationary part (20) of the press, and prior to the moulding step, a bush (6) advances in the bore (28, 28') due to the push rod and engages finally the stud (30), and on the other hand, when the press (2) is opened and after the moulding step, another bush (6) is inserted by gravity into the bore at the end of said push rod.

2. A device according to claim 1, characterized in that each descending branch for feeding bushes is permanently filled with bushes (5, 6) which are in contact with each other.

3. A device according to one of the claims 1 or 2, characterized in that it comprises a means (12) which is intended to feed bushes (5, 6) to each feed branch.

4. A device according to claim 3, characterized in that it comprises a means (32) which can convey the set of bushes in the pipe (1) after each positioning operation of one bush (5, 6) in the press (8) and thus after feeding another bush to said feed branches by said means (12).

5. A device according to claim 4, characterized in that said means (32) comprises a jack.

**Ansprüche**

1. Vorrichtung zur automatischen Zuführung von Hülsen zu einer Gußpresse zum Gießen von Stücken, die je mindestens eine Hülse aufweisen, wobei diese Presse zwei in bezug auf einen feststehenden Teil verschiebbare Teile und mindestens einen absteigenden Zweig zur Zuführung von Hülsen aufweist, der in eine Bohrung (28, 28') in einem der verschiebbaren Teile mündet, dadurch gekennzeichnet, daß die Stücke Akkumulatordeckel sind und ein jeder Bohrung zugeordneter Druckstempel (27, 27') mit dem festen Teil (20) der Presse (2) verbunden ist und während der Bewegung des verschiebbaren Teils (21) in diese Bohrung (28, 28') eingeführt werden kann, daß eine zu jeder Bohrung gehörende Spitze (30) auf dem anderen beweglichen Teil vorgesehen und gegenüber der Bohrung angeordnet ist, so daß einerseits während des Schließens der Presse durch Verschieben der beiden beweglichen Teile (21, 22), die gegen den feststehenden Teil (20) der Presse zum Anschlag kommen, und vor dem Gießvorgang eine Hülse (6) durch dem Druckstempel in die Bohrung (28, 28') bis in Kontakt mit der Spitze (30) gebracht wird, und daß andererseits während des Öffnens der Presse (2) und nach dem Gießvorgang eine neue Hülse (6) durch Schwerkraft in die Bohrung am Ende des Druckstempels eingeführt wird.

2. Vorrichtung nach Anspruch 1, dadurch gekennzeichnet, daß jeder absteigende Zweig zur Hülsenzuführung ständig mit Hülsen (5, 6) gefüllt ist, die miteinander in Berührung stehen.

3. Vorrichtung nach einem der Ansprüche 1 oder 2, dadurch gekennzeichnet, daß sie ein Organ (12) aufweist, das jeden Zuführungszweig mit Hülsen (5, 6) versorgen kann.

4. Vorrichtung nach Anspruch 3, dadurch gekennzeichnet, daß sie ein Mittel (32) aufweist, das nach jedem Einsetzen einer Hülse (5, 6) in die Presse (8), und daher nach der Versorgung dieser Zuführungszweige mit einer neuen Hülse durch dieses Organ (12), die Gesamtheit der Hülsen in der Rinne (1) vorwärts bewegen kann.

5. Vorrichtung nach Anspruch 4, dadurch gekennzeichnet, daß das Mittel (32) einen Kolben aufweist.

FIG.1

FIG.2

0 037 032

# FIG. 3

# FIG.4